# EUROPEAN PATENT APPLICATION

(11) **EP 1 897 913 A1**
(43) Date of publication of application: **12.03.2008**
(21) Application number: 06766808.7
(22) Date of filing: 16.06.2006
(51) Int. Cl.: C08L 81/04, C08K 3/10, C08K 5/14

(54) **CURABLE COMPOSITION**

(30) Priority: 27.06.2005 JP 2005186238; 21.09.2005 JP 2005273260; 05.12.2005 JP 2005350865
(71) Applicant: Toray Fine Chemicals Co., Ltd., Urayasu-shi, Chiba 279-8555 (JP)
(72) Inventor: KATO, Hidetoshi, 2990125 (JP); MATSUMOTO, Kazunori, 2900035 (JP); HIROSE, Toru, 1350085 (JP)
(74) Representative: Kador & Partner
(86) International application number: PCT/JP2006/312120
(87) International publication number: WO 2007/000904

(57) **Abstract**

The curable composition of this invention is a curable composition comprising 1 to 20 parts by weight of an organic peroxide and 0.0005 to 10 parts by weight of a redox reaction initiator containing at least one metal selected from copper, iron, lead, potassium, manganese, indium, nickel and cobalt per 100 parts by weight of a polysulfide polymer with a viscosity of 0.5 to 50 Pa·s at 25°C.

The curable composition of this invention has good curing properties. The cured material obtained by curing the curable composition of this invention is not swollen or does not decline in strength even if it is immersed in hot water for a long period of time, showing good water resistance.

The curable composition of this invention can be suitably used as a sealant of double glazings, aircraft, civil engineering and architecture.

## Description

### TECHNICAL FIELD

The present invention relates to a curable composition that can be suitably used as a sealant for double glazings, aircraft, civil engineering and architecture.

### BACKGROUND ART

A polysulfide polymer is easily oxidized by an oxidizing agent and cured at room temperature. Since a cured rubbery material obtained by curing a polysulfide polymer contains sulfur and does not contain a double bond in the main chain of the molecule, it is excellent in oil resistance, weather resistance, water tightness and gas tightness, and also good in adhesion. A cured rubbery material obtained by curing a polysulfide polymer is widely used as a sealant, adhesive or paint, since it is good in oil resistance, weather resistance, water tightness, gas tightness and adhesion.

A curable composition obtained by adding a metal dialkyldithiocarbamate to a polysulfide polymer and using a metal oxide or organic peroxide as the oxidizing agent was known (see patent document 1). The obtained cured material does not decline in adhesion even if it is exposed to accelerated artificial weathering for 500 hours and does not decline in adhesion even if it is immersed in water of 50°C for 7 days, also having excellent stability against light irradiation. However, a cured material obtained by curing with a metal oxide, especially manganese dioxide, has a problem that it declines in adhesive strength if it is subjected to a very long accelerated artificial weathering test of about 3,000 hours, though it is excellent in curing rate and working efficiency. Further, it has a problem that if it is immersed in water at a high temperature of about 80°C for a long period of time, it is swollen by the water soluble substance contained in manganese dioxide, though it restores its original size if it is dried. On the other hand, the use of an organic peroxide has a problem that the cured material obtained is low in the curing rate, hence low in the working efficiency. Further, if a tackifier is adequately selectively used, the cured material obtained can have a sufficient adhesive strength, but it can happen that in the case where the curable composition is used to bond plural different materials such as glass, metals, thermoplastic resins and mortar, a sufficient adhesive strength cannot be obtained.
[Patent Document 1] Japanese Published patent application S54-32566

### DISCLOSURE OF THE INVENTION

The present invention is a curable composition comprising 1 to 20 parts by weight of an organic peroxide and
0.0005 to 10 parts by weight of a redox reaction initiator containing at least one metal selected from copper, iron, lead, potassium, manganese, indium, nickel and cobalt,
per 100 parts by weight of a polysulfide polymer with a viscosity of 0.5 to 50 Pa·s at 25°C.

### BEST MODE FOR CARRYING OUT THE INVENTION

The curable composition of this invention is a curable composition comprising 1 to 20 parts by weight of an organic peroxide and 0.0005 to 10 parts by weight of a redox reaction initiator containing at least one metal selected from copper, iron, lead, potassium, manganese, indium, nickel and cobalt, per 100 parts by weight of a polysulfide polymer with a viscosity of 0.5 to 50 Pa·s at 25°C.

This invention is described below in detail.

The polysulfide polymer used in this invention is descried below.

The polysulfide polymer used in this invention is flowable at room temperature and has a viscosity of 0.5 to 50 Pa·s at 25°C. It is preferred that the polysulfide polymer used in this invention has a viscosity of 1.0 to 25 Pa·s at 25°C.

The polysulfide polymer used in this invention may contain water soluble metal compounds. It is preferred that the content of the water soluble metal compounds is 0.03 part by weight or less per 100 parts by weight of the polysulfide polymer. More preferred is 0.01 part by weight or less. It is preferred that the water soluble metal compound content is 0.03 part by weight or less, the curing rate does not fluctuate and that even if the cured material obtained by curing the polysulfide polymer is immersed in cold water or hot water for a long period of time, the cured material is little swollen in volume. Thiokol LP (produced by Toray Fine Chemicals Co., Ltd.) is a preferred polysulfide polymer, since its water soluble metal compound content is as very low as 0.01 part by weight or less.

The water soluble metal compounds that may be contained in the polysulfide polymer as the case include water soluble metal compounds and their ions. The water soluble metal compounds are mainly the chlorides, hydroxides, sulfides, polysulfides, hydrogensulfides, sulfates, sulfites, thiosulfates, etc. of metals, and particularly include sodium chloride, magnesium chloride, potassium chloride, iron (II) chloride, iron (III) chloride, sodium hydroxide, magnesium hydroxide, potassium hydroxide, iron hydroxide, sodium sulfide, potassium sulfide, calcium sulfide, sodium polysulfide, sodium hydrogensulfide, potassium hydrogensulfide, sodium sulfate, magnesium sulfate, potassium magnesium sulfate, potassium sulfate, calcium sulfate, iron sulfate, sodium hydrogensulfate, potassium hydrogensulfate, sodium sulfite, potassium sulfite, sodium thiosulfate, potassium thiosulfate, calcium thiosulfate, sodium ions, magnesium ions, potassium ions, iron (II) ions, iron (III) ions, chlorine ions, hydroxide ions, sulfide ions, hydrogensulfide ions, sulfuric acid ions, sulfurous acid ions, thiosulfuric acid ions, etc.

It is preferred that the polysulfide polymer used in this invention contains the building blocks represented by

-(R¹-Sₓ)-

(where x denotes an integer of 1 to 5, and R¹ denotes an alkyl group with 2 to 16 carbon atoms or ether bond-containing alkyl group with 2 to 16 carbon atoms) in the main chain, and has the thiol groups represented by

-R²-SH

(where R² denotes an alkyl group with 2 to 16 carbon atoms or ether bond-containing alkyl groups with 2 to 16 carbon atoms) at the ends.

It is preferred that R¹ denotes an organic residue such as -CH(CH₃)CH₂-, -CH₂CH₂-O-CH₂CH₂-, -CH₂CH₂-, -CH₂CH₂-O-CH₂-O-CH₂CH₂-, -CH (CH₃) CH₂-O-CH (CH₃) CH₂-O-CH (CH₃) CH₂-, or -CH₂CH₂-O-(CH₂CH₂-O)ₚ-CH₂CH₂- (p = 1 to 6).

It is preferred that R² denotes an organic residue such as -CH(CH₃)CH₂-, -CH₂CH₂-O-CH₂CH₂-, -CH₂CH₂-, -CH₂CH₂-O-CH₂-O-CH₂CH₂-, -CH(CH₃) CH₂-O-CH (CH₃) CH₂-O-CH(CH₃)CH₂-, or -CH₂CH₂-O-(CH₂CH₂-O)ₚ-CH₂CH₂- (p = 1 to 6).

Preferred examples of the polysulfide polymer are described in US Patent No. 2,466,963.

It is preferred that the polysulfide polymer used in this invention is the following polysulfide polyether polymer.

It is preferred that the polysulfide polymer used in this invention is a polysulfide polyether polymer containing the polyether portions represented by

- (R³O)ₙ-

(where R³ denotes an alkylene group with 2 to 4 carbon atoms, and n denotes an integer of 6 to 200) and the building blocks represented by

- (R⁴-Sₓ)-

and

-(CH₂CH(OH)CH₂-Sₓ)-

(where x denotes an integer of 1 to 5, and R⁴ denotes an alkyl group with 2 to 16 carbon atoms or ether bond-containing alkyl group with 2 to 16 carbon atoms) in the main chain, and having the thiol groups represented by

-R⁴-SH

and/or

-CH₂CH (OH) CH₂-SH

at the ends. It is preferred that R⁴ is an organic residue such as -CH (CH₃) CH₂-, -CH₂CH₂-O-CH₂CH₂-, -CH₂CH₂-, -CH₂CH₂-O-CH₂-O-CH₂CH₂-, -CH (CH₃) CH₂-O-CH (CH₃) CH₂-O-CH (CH₃) CH₂-, or -CH₂CH₂-O-(CH₂CH₂-O)ₚ-CH₂CH₂- (p = 1 to 6).

It is preferred that in the polysulfide polyether polymer, the polyether portions represented by

- (R³O)ₙ-

(where R³ denotes an alkylene group with 2 to 4 carbon atoms, and n denotes an integer of 6 to 200) and the structure units represented by

-(R⁴-Sₓ)-

and/or

-(CH₂CH(OH)CH₂-Sₓ)-

(where x denotes an integer of 1 to 5, and R⁴ denotes an alkyl group with 2 to 16 carbon atoms or ether bond-containing alkyl group with 2 to 16 carbon atoms) are bonded in any desired order.

It is more preferred that in the polysulfide polyether polymer used in this invention, the component of

-(R³O)ₙ-

(where R³ denotes an alkylene group with 2 to 4 carbon atoms, and n denotes an integer of 6 to 200) is 2 to 95 wt%, the component of

-(R⁴-Sₓ)-

(where x denotes an integer of 1 to 5, and R⁴ denotes an alkyl group with 2 to 16 carbon atoms or ether bond-containing alkyl group with 2 to 16 carbon atoms) is 3 to 70 wt%, and the component of

- (CH₂CH (OH) CH₂-Sₓ) -

is 1 to 50 wt%.

The polysulfide polyether polymer used in this invention may be produced, for example, as described in Japanese Published patent application H4-7331, by reacting a prepolymer with halogens at the ends obtained by adding an epihalohydrin to a polyoxyalkylene glycol and a polysulfide polymer with each other at a ratio by weight of 95/5 to 5/95 together with an alkali hydrosulfide and/or an alkali polysulfide.

It is preferred that the polysulfide polymer used in this invention is a thiol group-containing polyether polymer containing the building blocks represented by

-(R⁵O)ₙ-

(R⁵ denotes an alkylene group with 2 to 4 carbon atoms, and n denotes an integer of 6 to 300) in the main chain and having the thiol groups represented by

-CH₂CH(OH)CH₂-SH

at the ends. Preferred examples of the thiol group-containing polyether polymer are described in Japanese Published patent application H1-278557.

It is preferred that the thiol group-containing polyether polymer of this invention has a number-average molecular weight of 100 to 200,000. A more preferred range of the number-average molecular weight is 400 to 50,000.

The polysulfide polymer used in this invention may also be the polysulfide polymer in which the thiol groups are converted into trialkylsilylthio groups by a silylating reagent for protection, described in Japanese Published patent application S63-145321. A polymer containing two or more trialkylsilylthio groups per molecule, an oxidizing agent and a compound containing two or more isocyanate groups per molecule may be provided as a one-pack curable composition.

The organic peroxide used in this invention is described below.

As the organic peroxide used in this invention, a hydroperoxide, dialkyl peroxide, peroxyketal, peroxyester, peroxydicarbonate, diacyl peroxide, etc. may be used.

Examples of the organic peroxide used in this invention include t-butyl hydroperoxide, cumene hydroperoxide, 1,1,3,3-tetramethylbutyl hydroperoxide, diisopropylbenzene hydroperoxide, p-menthane hydroperoxide, di-t-butyl peroxide, t-butyl cumyl peroxide, 2,5-dimethyl-2,5-di(t-butylperoxy)hexane, di-t-hexyl peroxide, dicumyl peroxide, di(2-t-butylperoxyisopropyl)benzene, n-butyl-4,4-di-(t-butylperoxy)valerate, 2,2-di-(t-butylperoxy)butane, 2,2-di(4,4-di-(t-butylperoxy)cyclohexyl)propane, 1,1-di(t-butylperoxy)cyclohexane, 1,1-di(t-hexylperoxy)cyclohexane, 1,1-di(t-hexylperoxy)-3,3,5-trimethylcyclohexane, 1,1-di(t-butylperoxy)-2-methylcyclohexane, t-butyl peroxybenzoate, t-butyl peroxyacetate, 2,5-di-methyl-2,5-di(benzoylperoxy)hexane, t-hexyl peroxybenzoate, t-butyl peroxy-2-ethylhexyl monocarbonate, t-butyl peroxyisopropyl monocarbonate, 2,5-dimethyl-2,5-di-(3-methylbenzoylperoxy)hexane, t-butylperoxy-3,5,5-trimethylhexanoate, t-butylperoxymaleic acid, t-hexyl peroxyisopropyl monocarbonate, t-butyl peroxyisobutyrate, t-butyl peroxy-2-ethylhexanoate, t-hexyl peroxy-2-ethylhexanoate, 2,5-dimethyl-di(2-ethylhexanoylperoxy)hexane, 1,1,3,3-tetramethylbutyl peroxy-2-ethylhexanoate, t-butyl peroxypivalate, t-butyl peroxyneodecanoate, t-hexyl peroxyneodecanoate, 1-chclohexyl-1-methylethyl peroxyneodecanoate, 1,1,3,3-tetramethylbutyl peroxyneodecanoate, cumyl peroxyneodecanoate, dimethyloxybutyl peroxydicarbonate, di(2-ethylhexyl)peroxydicarbonate, di(4-t-butylcyclohexyl)peroxydicarbonate, di-sec-butyl peroxydicarbonate, diisopropyl peroxydicarbonate, di-n-propyl peroxydicarbonate, dibenzoyl peroxide, disuccinyl peroxide, distearoyl peroxide, dilauroyl peroxide, di-n-octanoyl peroxide, di (3,5,5-trimethylhexanoyl) peroxide, diisobutyloyl peroxide, etc. As the organic peroxide used in this invention, two or more of said organic peroxides may also be used.

As the organic peroxide used in this invention, a peroxyester and a hydroperoxide are preferred, since they are high in curing rate.

Further, an organic peroxide of a carbocyclic compound is preferred, since it is compatible with a polysulfide polymer and it provides a homogeneous cured material. Especially cumene hydroperoxide, p-menthane hydroperoxide, diisopropylbenzene hydroperoxide and t-butyl peroxybenzoate are preferred organic peroxides, since they are especially excellent in achieving the hardness.

For the curable composition of this invention, the added amount of the organic peroxide is 1 to 20 parts by weight, preferably 2 to 15 parts by weight per 100 parts by weight of the polysulfide polymer with a viscosity of 0.5 to 50 Pa·s at 25°C. If the added amount of the organic peroxide is less than 1 part by weight, curing is insufficient. If the added amount of the organic peroxide is more than 20 parts by weight, the cost of the curable composition rises.

Since the organic peroxides usable in the curable composition of this invention are mostly liquid and well dispersible compared with solid metals used as the conventional oxidizing agents, a homogeneous cured material can be obtained.

The redox reaction initiator used in this invention containing at least one metal selected from copper, iron, lead, potassium, manganese, indium, nickel and cobalt is described below.

The redox reaction initiator containing at least one metal selected from copper, iron, lead, potassium, manganese, indium, nickel and cobalt is a substance capable of oxidizing and reducing an organic peroxide, for promoting the decomposition of the organic peroxide. The redox reaction initiator includes the metal concerned, its ions or any of its compounds.

It is preferred that the redox reaction initiator used in this invention is a redox reaction initiator containing copper. A redox reaction initiator containing copper is preferred, since it is high in curing rate.

The ions contained in the redox reaction initiator used in this invention may be copper (I), copper (II), copper (III), iron (II), iron (III), iron (IV), iron (VI), potassium (I), manganese (II), manganese (III), manganese (IV), manganese (V), manganese (VI), manganese (VII), indium (III), nickel (II), cobalt (I), cobalt (II), cobalt (III), etc. Among them, copper (I), iron (II) and cobalt (III) are preferred, since they are high in curing rate.

The redox reaction initiator used in this invention may be any of the oxides, sulfides, halides, hydroxides, organic acid salts, acetylacetonates, sulfates, carbonates, complexes, etc. of the respective metals. Among them, copper compounds are preferred, since they are high in curing rate.

Examples of the redox reaction initiator used in this invention include copper (II) acetate, copper octanoate, copper (II) acetylacetonate, copper (I) bromide, copper (II) bromide, copper (II) carbonate, copper (I) chloride, copper (II) chloride, copper (II) diammonium chloride, copper (II) diphosphate, copper (II) hydroxide, copper (I) iodide, copper (I) naphthenate, copper (II) nitrate, copper (I) oxide, copper (II) oxide, copper (II) sulfate, copper (II) sulfide, iron (II) acetate, iron (III) acetylacetonate, iron (III) ammonium citrate, iron (II) stearate, iron (III) ammonium sulfate, iron (II) ammonium sulfate, iron (II) chloride, iron (III) chloride, iron (III) citrate, iron (III) fluoride, iron (II) fluoride, iron (II) fumarate, iron (III) hydroxide, iron (III) nitrate, iron (II) oxalate, iron (II) oxide, iron (II, III) oxide, iron (II) oxide, iron (II) phosphate, iron (III) phosphate, iron (II) sulfate, iron (III) sulfate, iron (II) sulfide, nickel (II) acetate, nickel (II) acetylacetonate, nickel (II) 2-ethylhexanoate, nickel (II) amidosulfate, nickel (II) bromide, nickel (II) carbonate, nickel (II) chloride, nickel (II) citrate, nickel (II) hydroxide, nickel (II) nitrate, nickel (II) oxide, nickel (III) oxide, nickel (II) stearate, nickel (II) sulfamate, nickel (II) sulfate, nickel (I) sulfide, nickel (II) sulfide, cobalt (II) acetate, cobalt (II) acetylacetonate, cobalt (III) acetylacetonate, cobalt (II) amidosulfate, cobalt (II) bromide, cobalt carbonate, cobalt (II) chloride, cobalt (II) citrate, cobalt (II) diammonium sulfate, cobalt (II) 2-ethylhexanoate, cobalt (II) iodide, cobalt hydroxide, cobalt naphthenate, cobalt (II) nitrate, cobalt (II) oxalate, cobalt (II, III) oxide, cobalt (II) phthalocyanine, cobalt (III) potassium cyanide, cobalt (III) sodium nitrite, cobalt (II) sulfamate, cobalt (II) sulfate, cobalt (II) sulfide, etc.

As the redox reaction initiator used in this invention, copper acetate, copper octanoate, copper naphthenate, copper acetylacetonate, copper chloride or copper oxide is more preferred in view of the excellent hardness achieved.

Further, in this invention, two or more redox reaction initiators respectively containing at least one metal selected from copper, iron, lead, potassium, manganese, indium, nickel and cobalt may also be used.

In the curable composition of this invention, the content of the redox reaction initiator containing at least one metal selected from copper, iron, lead, potassium, manganese, indium, nickel and cobalt is 0.0005 to 10 parts by weight per 100 parts by weight of the polysulfide polymer with a viscosity of 0.5 to 50 Pa·s at 25°C. If the content of the redox reaction initiator containing at least one metal selected from copper, iron, lead, potassium, manganese, indium, nickel and cobalt is less than 0. 0005 part by weight, curing may not take place, and if it is more than 10 parts by weight, curing is so fast as to shorten the useful life. It is preferred that the content of the redox reaction initiator containing at least one metal selected from copper, iron, lead, potassium, manganese, indium, nickel and cobalt is 0.0005 to 10 parts by weight. A more preferred content of the redox reaction initiator is 0.001 to 3 parts by weight, and a further more preferred content of the redox reaction initiator is 0.02 to 1 parts by weight.

In the curable composition of this invention, the curing rate can be easily controlled by changing the redox reaction initiator used and its added amount. The curable composition of this invention can maintain its good curing properties especially even at low temperature.

It is preferred that the curable composition of this invention contains a silane coupling agent.

The silane coupling agent preferably used in the curable composition of this invention is a compound containing a hydrolyzable silyl group and a reactive organic functional group.

Examples of the silane coupling agent preferably used in this invention include vinyltrimethoxysilane, vinyltriethoxysilane, 2-(3,4-epoxycyclohexyl)ethyltrimethoxysilane, 3-glycidoxypropyltrimethoxysilance, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2(aminoethyl)3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, 3-mercaptopropylmethyldimethoxysilane, 3-mercaptopropyltrimethoxysilane, bis(triethoxysilylpropyl)tetrasulfide, etc. Further, the polysulfide polymer modified by trimethoxysilane at the ends synthesized by letting polysulfide polymer "Thiokol LP-3" and 3-glycidoxypropyltrimethoxysilane react with each other, described in Japanese Published patent application H6-271833, may also be used as a silane coupling agent. Two or more of these silane coupling agents may also be used.

In this invention, it is preferred that the silane coupling agent is a silane coupling agent containing at least one reactive organic functional group selected from a vinyl group, styryl group, epoxy group, methacryloxy group, acryloxy group, amino group and thiol group, in view of high adhesive strength.

It is preferred that the silane coupling agent content in the curable composition of this invention is 0.1 to 10 parts by weight per 100 parts by weight of the polysulfide polymer with a viscosity of 0.5 to 50 Pa·s at 25°C. A more preferred content of the silane coupling agent is 0.5 to 5 parts by weight. If the silane coupling agent content is less than 0.5 part by weight, the adhesive strength may not be sufficiently obtained, and if it is more than 10 parts by weight, the cost may become high.

In the case where 0.1 to 10 parts by weight of a silane coupling agent are added to the curable composition of this invention, very high adhesive strength especially to various materials such as metals, glass, thermoplastic resins and mortar can be obtained even without such pretreatment as primer coating. The bonded interface is excellent in durability, and even if it is heated, immersed in hot water and irradiated with ultraviolet light respectively for a long period of time, the adhesive strength does not decline.

It is preferred that the curable composition of this invention contains a metal salt of an unsaturated carboxylic acid.

The metal salt of an unsaturated carboxylic acid preferably used in the curable composition of this invention is a salt formed from a metal and a compound having one or more double bonds or triple bonds between carbon atoms and one or more carboxyl groups.

In the metal salt of an unsaturated carboxylic acid preferably used in the curable composition of this invention, examples of the metal include lead, zinc, manganese, magnesium, calcium, potassium, sodium, aluminum, etc. Especially, zinc, magnesium, calcium and aluminum are preferred, since the effect of enhancing the maximum tensile strength is large.

In the metal salt of an unsaturated carboxylic acid preferably used in the curable composition of this invention, examples of the unsaturated carboxylic acid include acrylic acid, crotonic acid, isocrotonic acid, methacrylic acid, cinnamic acid, sorbic acid, etc. Especially acrylic acid and methacrylic acid are preferred, since they are likely to be dispersed in the polymer.

In the metal salt of an unsaturated carboxylic acid preferably used in the curable composition of this invention, examples of the metal salt of an unsaturated carboxylic acid include zinc acrylate, zinc methacrylate, magnesium acrylate, magnesium methacrylate, calcium acrylate, calcium methacrylate, aluminum acrylate, aluminum methacrylate, etc. Further, two or more metal salts of unsaturated carboxylic acids may also be used. Moreover, a compound containing any of said unsaturated carboxylic acids and a compound containing any of said metals may be added to the curable composition, to produce the metal salt of an unsaturated carboxylic acid in the composition.

It is preferred that the content of the metal salt of an unsaturated carboxylic acid preferably used in the curable composition of this invention is 0.1 to 50 parts by weight per 100 parts by weight of the polysulfide polymer with a viscosity of 0.5 to 50 Pa·s at 25°C. A more preferred content of the metal salt of an unsaturated carboxylic acid is 0.5 to 25 parts by weight, and a further more preferred content of the metal salt of an unsaturated carboxylic acid is 2.5 to 10 parts by weight. If the content of the metal salt of an unsaturated carboxylic acid is 0.1 part by weight or more, a sufficient effect of enhancing the maximum tensile strength may be obtained, and it is economically preferred that the content is 50 parts by weight or less.

In the case where the curable composition of this invention contains the metal salt of an unsaturated carboxylic acid, sufficient adhesive strength can be obtained even if the curable composition is used to bond different materials such as glass, metals, thermoplastic resins and mortar. Further, like manganese dioxide used hitherto, the curable composition has a long usable life and such a curing property that the curing after the end of the usable life is fast, assuring good working efficiency.

For the purpose of improving the economic efficiency, the working efficiency in applying the curable composition and the physical properties achieved after curing, the curable composition of this invention may contain a filler, for example, calcium carbonate, talc, clay, titanium oxide, silica, zeolite, perlite, or hollow microspheres such as ceramic balloons, glass balloons, silica balloons, *Shirasu* (white sandy deposit) balloons, alumina balloons or plastic balloons.

For the purpose of enhancing the economic efficiency, the working efficiency in applying the curable composition and the physical properties achieved after curing, the curable composition of this invention may contain a plasticizer such as a phthalic ester, butyl benzyl phthalate, chlorinated paraffin, hydrogenated terphenyl, or a hydrocarbon plasticizer described in Japanese Published patent application 2004-51918.

The hydrocarbon plasticizer that can be contained in the curable composition of this invention may be any of diarylalkane compounds, triaryldialkane compounds and aromatic hydrocarbons with high boiling points as the reaction products obtained from styrene dimer or trimer and an alkylbenzene, described in Japanese Published examined patent application S56-14705B, Japanese Published examined patent application S56-15440B, Japanese Published examined patent application S57-56511B, etc. A hydrocarbon plasticizer is small in hygroscopicity and is preferred, since the curable composition containing a hydrocarbon plasticizer has a high gas intercepting property.

For the purpose of enhancing the economic efficiency, the working efficiency in applying the curable composition and the physical properties achieved after curing, the curable composition of this invention may contain any of the fatty acid esters described in Japanese Published patent application 2000-344853, any of the ultraviolet light absorbers, antioxidants, soaps and tackifiers described in Japanese Published patent application 2001-64504, and any of the organic polysulfide compounds having only one -Sₓ- (where x denotes an integer of 2 or more) per molecule described in Japanese Published patent application 2001-220423.

As the fatty acid ester that may be contained in the curable composition of this invention, a wax obtained from a fatty acid and a monohydric or dihydric alcohol, or a fatty acid glycerol ester obtained from a fatty acid and glycerol (hereinafter called a fatty acid glyceride) may be used. The acid radical may be a saturated fatty acid and/or an unsaturated fatty acid. Examples of the saturated fatty acid include butyric acid, caproic acid, caprylic acid, capric acid, lauric acid, myristic acid, palmitic acid, stearic acid, arachidinic acid, behenic acid, liglynoceric acid, cerotic acid, montanic acid, and melissic acid. Examples of the unsaturated aliphatic acid include obstuslic acid, linderic acid, tuduric acid, spermic acid, myristoleic acid, zoomaric acid, petroceric acid, oleic acid, vaccenic acid, gadoleic acid, cetolic acid, erucic acid, selacholeic acid, linoleic acid, hiragoic acid, eleostearic acid, punicic acid, tricosanoic acid, linolenic acid, moroctic acid, parinaric acid, arachidonic acid, clupanodonic acid, *Rhizoprionodon* acid, and herring acid.

Among the above fatty acid esters, especially fatty acid glycerides are preferred. They include those having a saturated fatty acid as the acid radical such as stearic acid monoglyceride and stearic acid monodiglyceride, and those having an unsaturated fatty acid as the acid radical such as oleic acid monoglyceride and oleic acid monodiglyceride, and those having these acid radicals together such as oleic acid stearic acid monodiglyceride.

Examples of the ultraviolet light absorber that may be contained in the curable composition of this invention include benzophenones, benzotriazoles, phenyl salicylates, triazines, nickel salts and nickel complex salts. Especially preferred ultraviolet light absorbers are benzotriazoles, nickel salts and nickel complex salts. Above all, benzotriazoles are preferred as ultraviolet light absorbers.

Particular examples of the ultraviolet light absorbers that may be contained in the curable composition of this invention include 2-(2-hydroxy-5-methylphenyl)benzotriazole, 2-[2-hydroxy-3(3,4,5,6-tetra-hydrophthalimidomethyl)-5-methylp henyl]benzotriazole, 2-(2-hydroxy-3-t-butyl-5-methylphenyl)-5-chlorobenzotriazole, 2-(2-hydroxy-4-octylphenyl)benzotriazole, 2-(2-hydroxy-3,5-t-butylphenyl)benzotriazole, 2-(2-hydroxy-3,5-t-butylphenyl)-5-chlorobenzotriazole, 2-(2-hydroxy-5-t-octylphenyl)benzotriazole, 2-(2-hydroxy-3,5-di-t-amylphenyl)benzotriazole, nickel dibutyl dithiocarbamate, [2,2'-thiobis(4-t-octylphenolate)]-2-ethylhexylamine-nickel, etc.

Examples of the antioxidant that may be contained in the curable composition of this invention include amine-based antioxidants, phenol-based antioxidants, phosphite-based antioxidants, and thioether-based antioxidants. A phenol-based antioxidant is preferred, since it is well compatible with the polysulfide polymer.

Particular examples of the antioxidant that may be contained in the curable composition of this invention include 1,3,5-tris[[3,5-bis(1,1-dimethylethyl)-4-hydroxyphenyl]methyl] -1,3,5-triazine-2,4,6(1H,3H,5H)-trione, 1,1,3-tris(5-tert-butyl-4-hydroxy-2-methylphenyl)butane, 1,1-bis(4-hydroxy-2-methyl-5-tert-butylphenyl)butane, 2,2-bis[[[3-(3,5-di-tert-butyl-4-hydroxyphenyl)propionyl]oxy]m ethyl]pronane-1,3-diol, 1,3-bis[3-(3,5-di-tert-butyl-4-hydroxyphenyl)propionate], bis(3-tert-butyl-4-hydroxy-5-methylbenzenepropanoic acid)ethylenebis(oxyethylene), 4,4',4"-[(2,4,6-trimethylbenzene-1,3,5-triyl)tris(methylene)]t ris(2,6-di-tert-butylphenol), etc.

Examples of the tackifier that may be contained in the curable composition of this invention include coumarone-indene resins, terpene resins, rosin derivatives, alkylphenol resins, styrene resins, petroleum resins, etc. Above all, C9 petroleum resins and styrene resins are preferred, since they are well compatible with the polysulfide polymer.

The organic polysulfide compound having only one -Sₓ- (where x denotes an integer of 2 or more) per molecule, which may be contained in the curable composition of this invention, may be a straight chain or cyclic compound with aliphatic and/or aromatic groups. Examples of the organic polysulfide compound having only one -Sₓ- (where x denotes an integer of 2 or more) per molecule include dimethyl disulfide, di-t-butyl disulfide, dithiodiglycollic acid, dithiopropionic acid, dithiopropionic esters, dithiobenzoic acid, dithiosalicylic acid, di-t-nonyl polysulfide, di-t-dodecyl polysulfide, diphenyl disulfide, dibenzyl disulfide, lenthionine, sporidesmin, etc. An especially preferred organic polysulfide compound having only one -Sₓ- (where x denotes an integer of 2 or more) per molecule is di-t-dodecyl polysulfide having little offensive odor.

The curable composition of this invention has excellent curing properties and can be cured at room temperature to form a rubbery elastic material.

The cured material obtained from the curable composition of this invention is highly resistant against water, various solvents, fuel oil, acids and alkalis, and is little swollen even if it is immersed in them. Especially even if it is immersed in hot water of about 80°C for a long period of time, it is little swollen. Further, compared with cured materials obtained by using polybutadiene polyol or polysiloxane as the polymer, the cured material of this invention is excellent in the capability to intercept gas and water vapor, and so, can be used suitably for double glazings, aircraft, civil engineering and architecture.

A double glazing is a glass board consisting of plural glass sheets with a gas layer sealed between the respective glass sheets. The clearance which contains a gas layer is formed by keeping spacers of a metal or thermoplastic resin between the glass sheets along the edges of the glass sheets. Further, the grooves formed between the glass sheets on both sides and the spacers are filled with a sealant for double glazings, for bonding to support the structure.

A double glazing has a high heat insulation effect and can prevent due condensation, being effective also for prevention of crimes. So, double glazings are suitably used in buildings, dwelling houses, showcases of freezers and refrigerators, rolling stock, motor vehicles, etc. Above all, the double glazings used in buildings and dwelling houses are exposed to sunlight, wind and rain for long periods of time. So, it is preferred that the sealant of double glazings can hold the maximum tensile strength even if it is heated, immersed in hot water and irradiated with ultraviolet light respectively for a long period of time. The double glazings using the curable composition of this invention are especially suitable for buildings and dwelling houses requiring a long useful life, since they are excellent in durability.

It is preferred that the maximum tensile strength of the sealant for double glazings is 80 N/cm² or more. More preferred maximum tensile strength of the sealant for double glazings is 100 N/cm² or more. It is not preferred that the maximum tensile strength is less than 80 N/cm², since the sealant cannot sufficiently support the structure of double glazings, for example, due to the peeling of primary seal, etc.

In the tensile test of the sealant for double glazings after accelerated artificial weathering, it is preferred that the maximum tensile strength holding rate after lapse of 3000 hours is 70% or more. More preferred maximum tensile strength holding rate after lapse of 3000 hours is 80% or more.

Further, since many double glazings consist of spacers of aluminum or a thermoplastic resin and glass, it is preferred that the sealant has about the same maximum tensile strengths for them respectively. In the case where glass is used as substrates, it is preferred that the maximum tensile strength is 80 N/cm² or more. More preferred maximum tensile strength is 100 N/cm² or more. In the case where aluminum is used as substrates, it is preferred that the maximum tensile strength is 80 N/cm² or more. More preferred maximum tensile strength is 100 N/cm² or more.

The curable composition of this invention is high in the maximum tensile strength, and the bonded interface has excellent durability. Even if it is heated, immersed in hot water and irradiated with ultraviolet light respectively for a long period of time, it can hold the maximum tensile strength, and in addition it has sufficient adhesive strength to plural substrates to each other, such as glass and a metal, or glass and a thermoplastic resin. So, the curable composition of this invention can be suitably used as the sealant for double glazings.

When glass is used as substrates, it is preferred that the maximum tensile strength of the curable composition of this invention is 80 N/cm² or more. More preferred maximum tensile strength is 100 N/cm² or more.

When glass is used as substrates, it is preferred that the maximum tensile strength holding rate of the curable composition of this invention after lapse of 3000 hours in a tensile test after accelerated artificial weathering is 70% or more. More preferred maximum tensile strength holding rate is 80% or more.

When an aluminum sheet is used as substrates, it is preferred that the maximum tensile strength of the curable composition of this invention is 80 N/cm² or more. More preferred maximum tensile strength is 100 N/cm² or more.

When the curable composition of this invention is used as a sealant for architecture, a light-colored cured material can be obtained compared with the conventional curing agents of lead dioxide and manganese dioxide. So, if a pigment is added to the curable composition of this invention, the composition can be easily colored, showing a good design effect.

The curable composition of this invention is cured at room temperature, to form a rubbery elastic material. The curable composition of this invention allows the curing rate to be easily controlled, and has good curing properties especially even at low temperature. Even if the cured material obtained by curing the curable composition of this invention is immersed in hot water for a long period of time, it is not swollen or does not decline in strength, showing good water resistance.

When 0.1 to 10 parts by weight of a silane coupling agent are added as a tackifier to the curable composition of this invention, high adhesive strength can be obtained, and even if the bonded interface is heated, immersed in hot water and irradiated with ultraviolet light respectively for a long period of time, it is not swollen or does not decline in adhesive strength, showing excellent durability.

When 0.1 to 50 parts by weight of a metal salt of an unsaturated carboxylic acid are added to the curable composition of this invention, the maximum tensile strength of the cured material can be enhanced, and even in the case where the curable composition is used to bond different materials such as glass, a metal and a thermoplastic resin, or a metal and mortar, sufficient adhesive strength can be obtained.

The curable composition of this invention is suitably used as a sealant for double glazings, aircraft, civil engineering and architecture.

This invention is described below in more detail in reference to examples.

The curable composition of this invention was evaluated according to the following methods.

The hardness was measured according to "5. Durometer hardness test" of JIS K 6253-1997. For measurement, type A durometer was used. The specimens used were prepared by molding the curable composition into 10 mm thick sheets of 80 mm x 30 mm and curing them at 23°C and 55% RH (relative humidity) for 7 days.

The tensile test was performed according to "5.20 Tensile adhesion test" of JIS A 1439-2004. The specimens used were prepared according to 5.17.2. They were cured at 23°C and 55% RH (relative humidity) for 7 days. Further, the substrates used were aluminum sheets and glass sheets.

The tensile test after accelerated artificial weathering was performed according to "5.20.4 e) Tensile test after accelerated weathering exposure" of JIS 1439-2004. The test period was 3000 hours at the maximum, and a tensile test was performed every 1000 hours, to obtain the maximum tensile strength holding rate relative to the initial maximum tensile strength. The specimens used were prepared according to "5.17.2". They were cured at 23°C and 55% RH (relative humidity) for 7 days. Further, the material used for being bonded was glass sheets. The accelerated artificial weathering tester used was Sunshine Weather Meter WEL-SUN-HC (produced by Suga Test Instruments Co., Ltd.).

The percentage change in volume was measured according to "5.5.2 a) Measurement of mass change and volume change" of JIS K 6258-2003. The specimens were immersed in distilled water of 80°C for 10 days. The specimens used were prepared by molding the curable composition into 2 mm thick sheets, heating them at 70°C for 24 hours, for curing them, and cutting out 30 x 30 mm pieces.

The added amounts of metal naphthenates and 2-ethylhexylates among redox reaction initiators were obtained from the respective metal contents. A metal content was obtained by decomposing a redox reaction initiator by an acid, and performing chelatometric titration. The molecular weight of 2-ethylhexylic acid was assumed to be 144.21, and the molecular weight of the structurally unknown naphthenic acid was assumed to be 156.26 as 3-cyclohexylpropionic acid. The valences of metals were calculated as copper (I), iron (II), lead (II), cobalt (III), nickel (II), potassium (I), indium (II), zinc (II), manganese (IV), magnesium (II), calcium (II) and tin (II).

### Example 1

A plasticizer and a filler were mixed with a polysulfide polymer ("Thiokol LP-23" with a viscosity of 12 Pa·s at 25°C produced by Toray Fine Chemicals Co., Ltd.) at the ratio shown in Table 1 by a mixer, to obtain a main component.

**[Table 1]**

| Ingredient | | Amount (parts by weight) |
|---|---|---|
| Polymer | Polysulfide polymer | 100 |
| Plasticizer | Butyl benzyl phthalate | 40 |
| Filler | Calcium carbonate | 160 |

As the redox reaction initiator, copper { trade name: Copper (Powder) 200-mesh produced by Junsei Chemical Co., Ltd.} was added to 300 parts by weight of the main component as 1.0 part of 2 wt% metal and metal compound ethanol solution (0.02 part as the added amount of copper). As the curing agent, 9.0 parts of cumene hydroperoxide (trade name: Percumyl H-80 produced by NOF Corporation) were added as an organic peroxide, and the mixture was mixed to obtain a curable composition. The obtained curable composition was used to measure the hardness, and the result is shown in Table 2.

### Example 2

A curable composition was obtained as described in Example 1, except that copper acetylacetonate {trade name: Copper(II) acetylacetonate produced by Junsei Chemical Co., Ltd.} was added as 1.0 part of 2 wt% metal and metal compound ethanol solution, as the redox reaction initiator {0.02 part as the added amount of copper (II) acetylacetonate}. The obtained curable composition was used to measure the hardness, and the result is shown in Table 2.

### Example 3

A curable composition was obtained as described in Example 1, except that copper(I) chloride {trade name: Copper(I) Chloride produced by Junsei Chemical Co., Ltd.} was added as 1.0 part of 2 wt% metal and metal compound ethanol solution, as the redox reaction initiator {0.02 part as the added amount of the copper (I) chloride}. The obtained curable composition was used to measure the hardness, and the result is shown in Table 2.

### Example 4

A curable composition was obtained as described in Example 1, except that copper(II) chloride {trade name: Copper(II) Chloride Dihydrate produced by Junsei Chemical Co., Ltd.} was added as 1.0 part of 2 wt% metal and metal compound ethanol solution, as the redox reaction initiator {0.02 part as the added amount of copper(II) chloride dihydrate}. The obtained curable composition was used to measure the hardness, and the result is shown in Table 2.

### Example 5

A curable composition was obtained as described in Example 1, except that copper (I) oxide {trade name: Copper (I) Oxide produced by Junsei Chemical Co., Ltd.} was added as 1.0 part of 2 wt% metal and metal compound ethanol solution, as the redox reaction initiator {0.02 part as the added amount of the copper (I) oxide}. The obtained curable composition was used to measure the hardness, and the result is shown in Table 2.

### Example 6

A curable composition was obtained as described in Example 1, except that copper(II) oxide {trade name: Copper(II) Oxide produced by Junsei Chemical Co., Ltd.} was added as 1.0 part of 2 wt% metal and the metal compound ethanol solution, as the redox reaction initiator {0.02 part as the added amount of copper(II) oxide}. The obtained curable composition was used to measure the hardness, and the result is shown in Table 2.

### Example 7

A curable composition was obtained as described in Example 1, except that copper(II) acetate {trade name: Copper(II) Acetate Monohydrate produced by Junsei Chemical Co., Ltd.} was added as 1.0 part of 2 wt% metal and metal compound ethanol solution, as the redox reaction initiator {0.02 part as the added amount of copper (II) acetate monohydrate}. The obtained curable composition was used to measure the hardness, and the result is shown in Table 2.

### Example 8

A curable composition was obtained as described in Example 1, except that copper naphthenate {trade name: Naphthex Copper 5% (T) produced by Nihon Kagaku Sangyo Co., Ltd.} was added as 1.0 part of 5 wt% metal mineral spirit solution, as the redox reaction initiator (0.17 part as the added amount of copper naphthenate). The obtained curable composition was used to measure the hardness, and the result is shown in Table 2.

### Example 9

A curable composition was obtained as described in Example 1, except that iron 2-ethylhexylate {trade name: Nikkaoctix Iron 6% (T) produced by Nihon Kagaku Sangyo Co., Ltd.} was added as 1.0 part of 6 wt% metal mineral spirit solution as the redox reaction initiator (0.37 part as the added amount of iron 2-ethylhexylate). The obtained curable composition was used to measure the hardness, and the result is shown in Table 2.

### Example 10

A curable composition was obtained as described in Example 1, except that iron naphthenate {trade name: Naphthex Iron 5% (T) produced by Nihon Kagaku Sangyo Co., Ltd.} was added as 1.0 part of 5 wt% metal mineral spirit solution, as the redox reaction initiator (0.33 part as the added amount of iron naphthenate). The obtained curable composition was used to measure the hardness, and the result is shown in Table 2.

### Example 11

A curable composition was obtained as described in Example 1, except that lead 2-ethylhexylate {trade name: Nikkaoctix Lead 20% (T) produced by Nihon Kagaku Sangyo Co., Ltd.} was added as 1.0 part of 20 wt% metal mineral spirit solution, as the redox reaction initiator (0.48 part as the added amount of lead 2-ethylhexylate). The obtained curable composition was used to measure the hardness, and the result is shown in Table 2.

### Example 12

A curable composition was obtained as described in Example 1, except that lead naphthenate {trade name: Naphthex Lead 24% (T) produced by Nihon Kagaku Sangyo Co., Ltd.} was added as 1.0 part of 24 wt% metal mineral spirit solution, as the redox reaction initiator (0.60 part as the added amount of lead naphthenate) . The obtained curable composition was used to measure the hardness, and the result is shown in Table 2.

### Example 13

A curable composition was obtained as described in Example 1, except that cobalt 2-ethylhexylate {trade name: Nikkaoctix Cobalt 8% (T) produced by Nihon Kagaku Sangyo Co., Ltd.} was added as 1.0 part of 8 wt% metal mineral spirit solution, as the redox reaction initiator (0.66 part as the added amount of cobalt 2-ethylhexylate). The obtained curable composition was used to measure the hardness, and the result is shown in Table 2.

### Example 14

A curable composition was obtained as described in Example 1, except that cobalt naphthenate {trade name: Naphthex Cobalt 8% (T) produced by Nihon Kagaku Sangyo Co., Ltd.} was added as 1.0 part of 8 wt% metal mineral spirit solution, as of the redox reaction initiator (0.71 part as the added amount of cobalt naphthenate). The obtained curable composition was used to measure the hardness, and the result is shown in Table 2.

### Example 15

A curable composition was obtained as described in Example 1, except that nickel 2-ethylhexylate {trade name: Nikkaoctix Nickel 6% (T) produced by Nihon Kagaku Sangyo Co., Ltd.} was added as 1.0 part of 6 wt% metal mineral spirit solution, as the redox reaction initiator (0.35 part as the added amount of nickel 2-ethylhexylate). The obtained curable composition was used to measure the hardness, and the result is shown in Table 2.

### Example 16

A curable composition was obtained as described in Example 1, except that potassium 2-ethylhexylate {trade name: Nikkaoctix Potassium 10% (HG) produced by Nihon Kagaku Sangyo Co., Ltd.} was added as 1.0 part of 10wt% metal hexylene glycol solution, as the redox reaction initiator (0.47 part as the added amount of potassium 2-ethylhexylate). The obtained curable composition was used to measure the hardness, and the result is shown in Table 2.

### Example 17

A curable composition was obtained as described in Example 1, except that potassium naphthenate {trade name: Naphthex Potassium 8% (HG) produced by Nihon Kagaku Sangyo Co., Ltd.} was added as 1.0 part of 8wt% metal hexylene glycol solution, as the redox reaction initiator (0.40 part as the added amount of potassium naphthenate). The obtained curable composition was used to measure the hardness, and the result is shown in Table 2.

### Example 18

A curable composition was obtained as described in Example 1, except that indium 2-ethylhexylate {trade name: Nikkaoctix Indium 5% (P) produced by Nihon Kagaku Sangyo Co., Ltd.} was added as 1.0 part of 5wt% metal toluene solution, as the redox reaction initiator (0.17 part as the added amount of indium 2-ethylhexylate) . The obtained curable composition was used to measure the hardness, and the result is shown in Table 2.

### Example 19

A curable composition was obtained as described in Example 1, except that zinc naphthenate {trade name: Naphthex Zinc 8% (T) produced by Nihon Kagaku Sangyo Co., Ltd.} was added as 1.0 part of 8wt% metal mineral spirit solution, the redox reaction initiator (0.46 part as the added amount of zinc naphthenate). The obtained curable composition was used to measure the hardness, and the result is shown in Table 2.

**[Table 2]**

| | Redox reaction initiator | Added amount (parts) | Organic peroxide | Added amount (parts) | Shore A hardness Curing 7 days at 23°C |
|---|---|---|---|---|---|
| Example 1 | Copper | 0.02 | | | 23 |
| Example 2 | Copper acetylacetonate | 0.02 | | | 42 |
| Example 3 | Copper (I) chloride | 0.02 | | | 31 |
| Example 4 | Copper (II) chloride | 0.02 | Cumene hydroxyperoxide | 9.0 | 42 |
| Example 5 | Copper (I) oxide | 0.02 | | | 36 |
| Example 6 | Copper (II) oxide | 0.02 | | | 23 |
| Example 7 | Copper acetate | 0.02 | | | 42 |
| Example 8 | Copper naphthenate | 0.17 | | | 34 |
| Example 9 | Iron 2-ethylhexylate | 0.37 | | | 17 |
| Example 10 | Iron naphthenate | 0.33 | | | 38 |
| Example 11 | Lead 2-ethylhexylate | 0.48 | | | 33 |
| Example 12 | Lead naphthenate | 0.60 | | | 42 |
| Example 13 | Cobalt 2-ethylhexylate | 0.66 | | | 11 |
| Example 14 | Cobalt naphthenate | 0.71 | | | 9 |
| Example 15 | Nickel 2-ethylhexylate | 0.35 | | | 20 |
| Example 16 | Potassium 2-ethylhexylate | 0.47 | | | 42 |
| Example 17 | Potassium naphthenate | 0.40 | | | 32 |
| Example 18 | Indium 2-ethylhexylate | 0.17 | | | 28 |
| Example 19 | Zinc naphthenate | 0.45 | | | 15 |

### Example 20

A plasticizer and a filler were mixed with a polysulfide polymer ("Thiokol LP-23" with a viscosity of 12 Pa·s at 25°C produced by Toray Fine Chemicals Co., Ltd.) at the ratio shown in Table 1 by a mixer, to obtain a main component.

As the redox reaction initiator, copper {trade name: Copper (Powder) 200-mesh produced by Junsei Chemical Co., Ltd.} was added to 300 parts by weight of the main component as 1.0 part of 2 wt% metal and metal compound ethanol solution (0.02 part as the added amount of copper). As an organic peroxide to be used as a curing agent, 9.0 parts of t-butyl peroxybenzoate (trade name: Perbutyl Z produced by NOF Corporation) were mixed to obtain a curable composition. The obtained curable composition was used to measure the hardness, and the result is shown in Table 3.

### Example 21

A curable composition was obtained as described in Example 20, except that copper acetylacetonate {trade name: Copper(II) acetylacetonate produced by Junsei Chemical Co., Ltd.} was added as 1.0 part of 2 wt% metal and metal compound ethanol solution, as the redox reaction initiator {0.02 part as the added amount of copper(II) acetylacetonate}. The obtained curable composition was used to measure the hardness, and the result is shown in Table 3.

### Example 22

A curable composition was obtained as described in Example 20, except that copper(I) chloride {trade name: Copper(I) Chloride produced by Junsei Chemical Co., Ltd.} was added as 1.0 part of 2 wt% metal and metal compound ethanol solution, as the redox reaction initiator {0.02 part as the added amount of copper(I) chloride}. The obtained curable composition was used to measure the hardness, and the result is shown in Table 3.

### Example 23

A curable composition was obtained as described in Example 20, except that copper(II) chloride {trade name: Copper(II) Chloride Dihydrate produced by Junsei Chemical Co., Ltd. } was added as 1.0 part of 2 wt% metal and metal compound ethanol solution, as the redox reaction initiator {0.02 part as the added amount of copper(II) chloride}. The obtained curable composition was used to measure the hardness, and the result is shown in Table 3.

### Example 24

A curable composition was obtained as described in Example 20, except that copper(I) oxide {trade name: Copper(I) Oxide produced by Junsei Chemical Co., Ltd.} was added as 1.0 part of 2 wt% metal and metal compound ethanol solution, as the redox reaction initiator {0.02 part as the added amount of copper(I) oxide}. The obtained curable composition was used to measure the hardness, and the result is shown in Table 3.

### Example 25

A curable composition was obtained as described in Example 20, except that copper(II) oxide {trade name: Copper(II) Oxide produced by Junsei Chemical Co., Ltd.} was added as 1.0 part of 2 wt% metal and metal compound ethanol solution, as the redox reaction initiator {0.02 part as the added amount of copper(II) oxide}. The obtained curable composition was used to measure the hardness, and the result is shown in Table 3.

### Example 26

A curable composition was obtained as described in Example 20, except that copper(II) acetate {trade name: Copper(II) Acetate Monohydrate produced by Junsei Chemical Co., Ltd.} was added as 1.0 part of 2 wt% metal and metal compound ethanol solution, as the redox reaction initiator {0.02 part as the added amount of copper(II) acetate monohydrate}. The obtained curable composition was used to measure the hardness, and the result is shown in Table 3.

### Example 27

A curable composition was obtained as described in Example 20, except that copper naphthenate {trade name: Naphthex Copper 5% (T) produced by Nihon Kagaku Sangyo Co., Ltd.} was added as 1.0 part of 5 wt% metal mineral spirit solution, as the redox reaction initiator (0.17 part as the added amount of copper naphthenate). The obtained curable composition was used to measure the hardness, and the result is shown in Table 3.

### Example 28

A curable composition was obtained as described in Example 20, except that iron 2-ethylhexylate {trade name: Nikkaoctix Iron 6% (T) produced by Nihon Kagaku Sangyo Co., Ltd.} was added as 1.0 part of 6 wt% metal mineral spirit solution, as the redox reaction initiator (0.37 part as the added amount of iron 2-ethylhexylate) . The obtained curable composition was used to measure the hardness, and the result is shown in Table 3.

### Example 29

A curable composition was obtained as described in Example 20, except that iron naphthenate {trade name: Naphthex Iron 5% (T) produced by Nihon Kagaku Sangyo Co., Ltd.} was added as 1.0 part of 5 wt% metal mineral spirit solution, as the redox reaction initiator (0.33 part as the added amount of iron naphthenate) . The obtained curable composition was used to measure the hardness, and the result is shown in Table 3.

### Example 30

A curable composition was obtained as described in Example 20, except that cobalt 2-ethylhexylate {trade name: Nikkaoctix Cobalt 8% (T) produced by Nihon Kagaku Sangyo Co., Ltd.} was added as 1.0 part of 8 wt% metal mineral spirit solution, as the redox reaction initiator (0.66 part as the added amount of cobalt 2-ethylhexylate). The obtained curable composition was used to measure the hardness, and the result is shown in Table 3.

### Example 31

A curable composition was obtained as described in Example 20, except that cobalt naphthenate {trade name: Naphthex Cobalt 8% (T) produced by Nihon Kagaku Sangyo Co., Ltd.} was added as 1.0 part of 8 wt% metal mineral spirit solution, as the redox reaction initiator (0.71 part as the added amount of cobalt naphthenate). The obtained curable composition was used to measure the hardness, and the result is shown in Table 3.

### Example 32

A curable composition was obtained as described in Example 20, except that manganese 2-ethylhexylate {trade name: Nikkaoctix Manganese 8% (T) produced by Nihon Kagaku Sangyo Co., Ltd.} was added as 1.0 part of 8 wt% metal mineral spirit solution, as the redox reaction initiator (0.91 part as the added amount of manganese 2-ethylhexylate). The obtained curable composition was used to measure the hardness, and the result is shown in Table 3.

**[Table 3]**

| | Redox reaction initiator | Added amount (parts) | Organic peroxide | Added amount (parts) | Shore A hardness Curing 7 days at 23°C |
|---|---|---|---|---|---|
| Example 20 | Copper | 0.02 | | | 50 |
| Example 21 | Copper acetylacetonate | 0.02 | | | 51 |
| Example 22 | Copper (I) chloride | 0.02 | | | 53 |
| Example 23 | Copper (II) chloride | 0.02 | | | 55 |
| Example 24 | Copper (I) oxide | 0.02 | | | 48 |
| Example 25 | Copper (II) oxide | 0.02 | t-butyl peroxybenzoate | 9.0 | 52 |
| Example 26 | Copper acetate | 0.02 | | | 48 |
| Example 27 | Copper naphthenate | 0.17 | | | 52 |
| Example 28 | Iron 2-ethylhexylate | 0.37 | | | 49 |
| Example 29 | Iron naphthenate | 0.33 | | | 44 |
| Example 30 | Cobalt 2-ethylhexylate | 0.66 | | | 8 |
| Example 31 | Cobalt naphthenate | 0.71 | | | 8 |
| Example 32 | Manganese 2-ethylhexylate | 0.91 | | | 26 |

### Comparative Example 1

A plasticizer and a filler were mixed with a polysulfide polymer ("Thiokol LP-23" with a viscosity of 12 Pa·s at 25°C produced by Toray Fine Chemicals Co., Ltd.) at the ratio shown in Table 1 by a mixer, to obtain a main component.

As an organic peroxide, 9.0 parts of cumene hydroperoxide (trade name: Percumyl H-80 produced by NOF Corporation) was added to 300 parts by weight of the main component, and the mixture was mixed to obtain a curable composition. No redox reaction initiator was added. The obtained curable composition was used to measure the hardness as described in Example 1, and the result is shown in Table 4. The composition could not be well hardened. When it was cured at 23°C for 7 days, it was not hardened to the extent to be able to measure hardness.

### Comparative Example 2

A plasticizer and a filler were mixed with a polysulfide polymer ("Thiokol LP-23" with a viscosity of 12 Pa·s at 25°C produced by Toray Fine Chemicals Co., Ltd.) at the ratio shown in Table 1 by a mixer, to obtain a main component.

As a curing accelerator, 1.0 part of tris(dimethylaminomethyl)phenol was added to 300 parts by weight of the main component, and 9.0 parts of cumene hydroperoxide (trade name: Percumyl H-80 produced by NOF Corporation) as an organic peroxide was added to 300 parts by weight of the main component. The mixture was mixed to obtain a curable composition. The obtained curable composition was used to measure the hardness as described in Example 1. The result is shown in Table 4. The appearance of hardness was bad. When it was cured at 23°C for 7 days, it could not be hardened to the extent to be able to measure hardness.

### Comparative Example 3

A cured composition was obtained as described in Comparative Example 2, except that 1.0 part of 3-diethylaminopropylamine was added as a curing accelerator. The obtained curable composition was used to measure the hardness as described in Comparative Example 2. The result is shown in Table 4. The appearance of hardness was bad. When it was cured at 23°C for 7 days, it could not be hardened to the extent to be able to measure hardness.

### Comparative Example 4

A curable composition was obtained as described in Comparative Example 2, except that 1.0 part of 2 wt% magnesium naphthenate { trade name: Naphthex Magnesium 2% (K) produced by Nihon Kagaku Sangyo Co., Ltd.} white kerosene solution was added as a curing accelerator (0.28 part as the added amount of magnesium naphthenate). The obtained curable composition was used to measure the hardness as described in Comparative Example 2. The result is shown in Table 4. The appearance of hardness was bad. When it was cured at 23°C for 7 days, it could not be hardened to the extent to be able to measure hardness.

### Comparative Example 5

A curable composition was obtained as described in Comparative Example 2, except that 1.0 part of 3 wt% calcium naphthenate {trade name: Naphthex Calcium 3% (K) produced by Nihon Kagaku Sangyo Co., Ltd.} white kerosene solution was added as a curing accelerator (0.26 part as the added amount of calcium naphthenate). The obtained curable composition was used to measure the hardness as described in Comparative Example 2. The result is shown in Table 4. The appearance of hardness was bad. When it was cured at 23°C for 7 days, it could not be hardened to the extent to be able to measure hardness.

### Comparative Example 6

A curable composition was obtained as described in Comparative Example 2, except that 1.0 part of tin octylate (trade name: Nikkaoctix Tin 28% produced by Nihon Kagaku Sangyo Co. , Ltd.) was added as a curing accelerator (0.96 part as the added amount of tin octylate). The obtained curable composition was used to measure the hardness as described in Comparative Example 2. The result is shown in Table 4. The appearance of hardness was bad. When it was cured at 23°C for 7 days, it could not be hardened to the extent to be able to measure hardness.

**[Table 4]**

| | Curing accelerator | Added amount (parts) | Organic peroxide | Added amount (parts) | Shore A hardness Curing 7 days at 23°C |
|---|---|---|---|---|---|
| Comparative Example 1 | Nil | | | | × |
| Comparative Example 2 | Tris(dimethylaminomethyl)phenol | 1.0 | | | × |
| Comparative Example 3 | 3-diethylaminopropylamine | 1.0 | Cumene hydroxyperoxide | 9.0 | × |
| Comparative Example 4 | Magnesium naphthenate | 0.28 | | | × |
| Comparative Example 5 | Calcium naphthenate | 0.26 | | | × |
| Comparative Example 6 | Tin octylate | 0.96 | | | × |

| | | | | | |
|---|---|---|---|---|---|
| × means that hardness was not able to measure since hardening was insufficient. | | | | | |

### Comparative Example 7

A plasticizer and a filler were mixed with a polysulfide polymer ("Thiokol LP-23" with a viscosity of 12 Pa·s at 25°C produced by Toray Fine Chemicals Co., Ltd.) at the ratio shown in Table 1 by a mixer, to obtain a main component.

As an organic peroxide, 9.0 parts of t-butyl peroxybenzoate (trade name: Perbutyl Z produced by NOF Corporation) was added to and mixed with 300 parts by weight of the main component, to obtain a curable composition. No redox reaction initiator was added. The obtained curable composition was used to measure the hardness as described in Example 1. The result is shown in Table 5. The appearance of hardness was bad. When it was cured at 23°C for 7 days, it could not be hardened to the extent to be able to measure hardness.

### Comparative Example 8

A plasticizer and a filler were mixed with a polysulfide polymer ("Thiokol LP-23" with a viscosity of 12 Pa·s at 25°C produced by Toray Fine Chemicals Co., Ltd.) at the ratio shown in Table 1 by a mixer, to obtain a main component.

As a curing accelerator, 1.0 part of tris(dimethylaminomethyl)phenol was added to 300 parts by weight of the main component, and 9.0 parts of t-butyl peroxybenzoate (trade name: Perbutyl Z produced by NOF Corporation) as an organic peroxide was added to 300 parts by weight of the main component. The mixture was mixed to obtain a curable composition. The obtained curable composition was used to measure the hardness as described in Example 1. The result is shown in Table 5. The appearance of hardness was bad. When it was cured at 23°C for 7 days, it could not be hardened to the extent to be able to measure hardness.

### Comparative Example 9

A curable composition was obtained as described in Comparative Example 2, except that 1.0 part of 3-diethylaminopropylamine was added as a curing accelerator. The obtained curable composition was used to measure the hardness as described in Comparative Example 8. The result is shown in Table 5. The appearance of hardness was bad. When it was cured at 23°C for 7 days, it could not be hardened to the extent to be able to measure hardness.

### Comparative Example 10

A curable composition was obtained as described in Comparative Example 2, except that 1. 0 part of 2 wt% magnesium naphthenate {trade name: Naphthex Magnesium 2% (K) produced by Nihon Kagaku Sangyo Co. , Ltd. } white kerosene solution was added as a curing accelerator (0.28 part as the added amount of magnesium naphthenate). The obtained curable composition was used to measure the hardness as described in Comparative Example 8. The result is shown in Table 5. The appearance of hardness was bad. When it was cured at 23°C for 7 days, it could not be hardened to the extent to be able to measure hardness.

### Comparative Example 11

A curing composition was obtained as described in Comparative Example 8, except that 1.0 part of 3 wt% calcium naphthenate {trade name: Naphthex Calcium 3% (K) produced by Nihon Kagaku Sangyo Co. , Ltd.} white kerosene solution was added as a curing accelerator (0.26 part as the added amount of calcium naphthenate). The obtained curable composition was used to measure the hardness as described in Comparative Example 2. The result is shown in Table 5. The appearance of hardness was bad. When it was cured at 23°C for 7 days, it could not be hardened to the extent to be able to measure hardness.

### Comparative Example 12

A curable composition was obtained as described in Comparative Example 8, except that 1.0 part of tin octylate (trade name: Nikkaoctix Tin 28% produced by Nihon Kagaku Sangyo Co., Ltd.) was added as a curing accelerator (0.96 part as the added amount of tin octylate). The obtained curable composition was used to measure the hardness as described in Comparative Example 8. The result is shown in Table 5. The appearance of hardness was bad. When it was cured at 23°C for 7 days, it could not be hardened to the extent to be able to measure hardness.

**[Table 5]**

| | Curing accelerator | Added amount (parts) | Organic peroxide | Added amount (parts) | Shore A hardness Curing 7 days at 23°C |
|---|---|---|---|---|---|
| Comparative Example 7 | Nil | - | | | × |
| Comparative Example 8 | Tris(dimethylaminomethyl)phenol | 1.0 | | | × |
| Comparative Example 9 | 3-diethylaminopropylamine | 1.0 | t-butyl peroxybenzoate | 9.0 | × |
| Comparative Example 10 | Magnesium naphthenate | 0.28 | | | × |
| Comparative Example 11 | Calcium naphthenate | 0.26 | | | × |
| Comparative Example 12 | Tin octylate | 0.96 | | | × |

| | | | | | |
|---|---|---|---|---|---|
| × means that hardness was not able to measure since hardening was insufficient. | | | | | |

### Example 33

A plasticizer, 1.0 part of 2 wt% copper acetate {trade name: Copper (II) Acetate Monohydrate produced by Junsei Chemical Co., Ltd.} ethanol solution as the redox reaction initiator {0.02 part as the added amount of copper (II) acetate monohydrate}, and a filler were added to a polysulfide polymer (trade name: Thiokol LP-23 produced by Toray Fine Chemicals Co., Ltd.) at the ratio shown in Table 6. Further, 3.0 parts of vinyltrimethoxysilane were added as a silane coupling agent per 100 parts by weight of the polysulfide polymer, and the mixture was mixed by a mixer to obtain a main component. As an organic peroxide, 5.5 parts of t-butyl peroxybenzoate (trade name: Perbutyl Z produced by NOF Corporation) were added to 319.5 parts by weight of the main component, and the mixture was mixed to obtain a curable composition.

[0143] The obtained curable composition was cured at 23°C and 55% RH (relative humidity) for 7 days, and a tensile test was performed. Glass sheets were used as substrates. The maximum tensile strength after curing at 23°C and 55% RH (relative humidity) for 7 days is shown in Table 7 as the initial maximum tensile strength.

Further, similarly obtained H-shaped specimens were used to perform a tensile test after accelerated artificial weathering. Glass sheets were used as substrates. The maximum tensile strength holding rates relative to the initial maximum tensile strength are shown in Table 7.

Furthermore, the percentage change in volume of the curable composition was measured, and the result is shown in Table 7.

**[Table 6]**

| Ingredient | | Amount (parts by weight) |
|---|---|---|
| Polymer | Polysulfide polymer | 100 |
| Plasticizer | Butyl benzyl phthalate | 40 |
| Redox reaction initiator | Copper acetate | 0.02 |
| Filler | Calcium carbonate | 175 |
| | Carbon | 0.5 |
| Organic peroxide | t-butyl peroxybenzoate | 5.5 |

### Example 34

A curable composition was obtained as described in Example 33, except that 3.0 parts of 3-glycidoxytrimethoxysilane (trade name: SH-6040 produced by Dow Coning Toray Co., Ltd.) was added as a silane coupling agent. The properties of the obtained curable composition were evaluated as described in Example 33. The results are shown in Table 7.

### Example 35

A curable composition was obtained as described for Example 33, except that 3.0 parts of 3-mercaptopropyltrimethoxysilane (trade name: KBE803 produced by Shin-Etsu Chemical Co., Ltd.) were added as a silane coupling agent. The properties of the obtained curable composition were evaluated as described in Example 33, and the results are shown in Table 7.

The curable compositions of Examples 33 through 35 did not decline in maximum tensile strength and remained good even after lapse of 3000 hours as a test period of time. Further, they were small in volume swelling rate even when they were immersed in hot water for a long period of time, showing good water resistance.

**[Table 7]**

| | Silane coupling agent | Added amount (parts) | Accelerated artificial weathering test | | | | Percentage change in volume |
|---|---|---|---|---|---|---|---|
| | | | Initial | 1000 hours later | 2000 hours later | 3000 hours later | After having been immersed in water of 80°C for 10 days |
| | | | Maximum tensile strength | Maximum tensile strength holding rate | Maximum tensile strength holding rate | Maximum tensile strength holding rate | (%) |
| | | | (N/cm²) | (%) | (%) | (%) | |
| Example 33 | Vinyltrimethoxysilane | 3.0 | 114 | 100 | 92 | 82 | 2 |
| Example 34 | 3-glycidoxytrimethoxysilane | 3.0 | 115 | 99 | 100 | 92 | 1 |
| Example 35 | 3-mercaptopropyltrimethoxysilane | 3.0 | 115 | 95 | 97 | 81 | 2 |

### Comparative Example 13

A commercially available sealant (trade name: IGS-203 produced by Sanyu Rec Co., Ltd.) using polybutadiene polyol as the base polymer was cured at 23°C and 55% RH (relative humidity) for 7 days, to perform a tensile test as described in Example 33. Glass sheets were used as substrates. The maximum tensile strength after having been cured at 23°C and 55% RH (relative humidity) for 7 days is shown as the initial maximum tensile strength in Table 7. Further, similarly obtained H-shaped specimens were used to perform a tensile test after accelerated artificial weathering. Glass sheets were used as the substrates. The maximum tensile strength holding rates relative to the initial maximum tensile strength are shown in Table 7.

When a sealant using polybutadiene polyol as the base polymer was used, the maximum tensile strength holding rate declined with increase in the test period of time.

**[Table 8]**

| | Sample | Accelerated artificial weathering test | | | | Percentage change in volume |
|---|---|---|---|---|---|---|
| | | Initial | 1000 hours later | 2000 hours later | 3000 hours later | After having been immersed in water of 80°C for 10 days (%) |
| | | Maximum tensile strength (N/cm²) | Maximum tensile strength holding rate (%) | Maximum tensile strength holding rate (%) | Maximum tensile strength holding rate (%) | |
| Comparative Example 13 | Sealant using polybutadiene polyol as base polymer | 153 | 91 | 72 | 53 | 8 |

### Example 36

A plasticizer (butyl benzyl phthalate), 2 wt% copper acetate {trade name: Copper (II) Acetate Monohydrate produced by Junsei Chemical Co., Ltd.} ethanol solution {0.02 part as the added amount of copper (II) acetate monohydrate} as the redox reaction initiator, glycidoxypropyltrimethoxysilane (trade name: SH-6040 produced by Dow Corning Toray Co., Ltd. ) as a silane coupling agent and a filler (calcium carbonate) were mixed with 100 parts by weight of a polysulfide polymer ("Thiokol LP-55" with a viscosity of 45 Pa·s at 25°C produced by Toray Fine Chemicals Co., Ltd.) at the ratio shown in Table 9. Further, 2.5 parts of zinc acrylate (trade name: Zinc Acrylate produced by Asada Chemical Industry Co., Ltd.) were added as a metal salt of an unsaturated carboxylic acid, and the mixture was mixed by a mixer, to obtain a main component. To 297.5 parts by weight of the main component, t-butyl peroxybenzoate (trade name: Perbutyl Z produced by NOF Corporation) was added as an oxidizing agent at the ratio shown in Table 9, to obtain a curable composition.

The obtained curable composition was cured at 23°C and 55% RH (relative humidity) for 7 days, to perform a tensile test. Aluminum sheets and glass sheets were used as substrates. The results are shown in Table 10.

**[Table 9]**

| Ingredient | | Amount (parts by weight) |
|---|---|---|
| Polymer | Polysulfide polymer | 100 |
| Plasticizer | Butyl benzyl phthalate | 36 |
| Redox reaction initiator | Copper acetate | 0.02 |
| Silane coupling agent | Glycidoxypropyltrimethoxysilane | 3.0 |
| Filler | Calcium carbonate | 155 |
| Organic peroxide | t-butyl peroxybenzoate | 5.5 |

### Example 37

A curable composition was obtained as described in Example 36, except that 5.0 parts of zinc acrylate (trade name: Zinc Acrylate produced by Asada Chemical Industry Co., Ltd.) was added as a metal salt of an unsaturated carboxylic acid. The properties of the obtained curable composition were evaluated as described in Example 36. The results are shown in Table 10.

### Example 38

A curable composition was obtained as described in Example 36, except that 2.5 parts of zinc methacrylate (trade name: Zinc Methacrylate produced by Asada Chemical Industry Co., Ltd.) was added as a metal salt of an unsaturated carboxylic acid. The properties of the obtained curable composition were evaluated as described for Example 36. The results are shown in Table 10.

### Example 39

A curable composition was obtained as described in Example 36, except that 5.0 parts of zinc methacrylate (trade name: Zinc Methacrylate produced by Asada Chemical Industry Co., Ltd.) was added as a metal salt of an unsaturated carboxylic acid. The properties of the obtained curable composition were evaluated as described for Example 36. The results are shown in Table 10.

### Example 40

A curable composition was obtained as described in Example 36, except that 5.0 parts of magnesium acrylate (trade name: Magnesium Acrylate produced by Wako Pure Chemical Industries, Ltd.) was added as a metal salt of an unsaturated carboxylic acid. The properties of the obtained curable composition were evaluated as described for Example 36. The results are shown in Table 10.

### Example 41

A curable composition was obtained as described in Example 36, except that 5.0 parts of magnesium methacrylate (trade name: Magnesium Methacrylate produced by Wako Pure Chemical Industries, Ltd.) was added as a metal salt of an unsaturated carboxylic acid. The properties of the obtained curable composition were evaluated as described for Example 36. The results are shown in Table 10.

### Example 42

A curable composition was obtained as described in Example 36, except that 5.0 parts of calcium methacrylate (trade name: Calcium Methacrylate produced by Junsei Chemical Co., Ltd.) was added as a metal salt of an unsaturated carboxylic acid. The properties of the obtained curable composition were evaluated as described in Example 36. The results are shown in Table 10.

The curable compositions of Examples 36 through 42 were high in maximum tensile strength, and even when aluminum sheets were used as substrates, the maximum tensile strengths were about the same as those obtained by using glass sheets.

**[Table 10]**

| | Metal salt of unsaturated carboxylic acid | Added amount (parts) | Substrates | |
|---|---|---|---|---|
| | | | Glass | Aluminum |
| | | | Maximum tensile strength (N/cm²) | Maximum tensile strength (N/cm²) |
| Example 36 | Zinc acrylate | 2.5 | 110 | 111 |
| Example 37 | Zinc acrylate | 5.0 | 124 | 126 |
| Example 38 | Zinc methacrylate | 2.5 | 108 | 105 |
| Example 39 | Zinc methacrylate | 5.0 | 113 | 117 |
| Example 40 | Magnesium acrylate | 5.0 | 120 | 103 |
| Example 41 | Magnesium methacrylate | 5.0 | 126 | 104 |
| Example 42 | Calcium methacrylate | 5.0 | 122 | 116 |

### INDUSTRIAL APPLICABILITY

The curable composition of this invention is good in working efficiency, since the curing rate is high. The cured material obtained from the curable composition of this invention is not swollen or does not decline in strength even if it is immersed in hot water for a long period of time, showing good water resistance, and is also excellent in adhesion and durability. The curable composition of this invention is good in working efficiency, showing good water resistance, and is also excellent in adhesion and durability. The curable composition of this invention can be suitably used as a sealant for double glazings, aircraft, civil engineering and architecture.

## Claims

1. A curable composition comprising 1 to 20 parts by weight of an organic peroxide and 0.0005 to 10 parts by weight of a redox reaction initiator containing at least one metal selected from copper, iron, lead, potassium, manganese, indium, nickel and cobalt per 100 parts by weight of a polysulfide polymer with a viscosity of 0.5 to 50 Pa·s at 25°C.

2. A curable composition, according to claim 1, wherein the organic peroxide is at least one organic peroxide selected from peroxyesters and hydroperoxides.

3. A curable composition, according to claim 2, wherein the organic peroxide is a carbocyclic compound.

4. A curable composition, according to any one of claims 1 through 3, wherein the redox reaction initiator containing at least one metal selected from copper, iron, lead, potassium, manganese, indium, nickel and cobalt is a redox reaction initiator containing copper.

5. A curable composition, according to any one of claims 1 through 4, wherein the redox reaction initiator containing copper is copper acetate, copper octanoate, copper naphthenate, copper acetylacetonate, copper chloride or copper oxide.

6. A curable composition, according to any one of claims 1 through 5, wherein the water soluble metal compound content of the polysulfide polymer is 0.03 part by weight or less per 100 parts by weight of the polysulfide polymer.

7. A curable composition, according to any one of claims 1 through 6, wherein a silane coupling agent is contained by 0.1 to 10 parts by weight.

8. A curable composition, according to any one of claims 1 through 7, wherein the silane coupling agent contains at least one reactive organic functional group selected from a vinyl group, styryl group, epoxy group, methacryloxy group, acryloxy group, amino group and thiol group.

9. A curable composition, according to any one of claims 1 through 8, wherein a metal salt of an unsaturated carboxylic acid is contained by 0.1 to 50 parts by weight.

10. A curable composition, according to any one of claims 1 through 9, wherein the metal of the metal salt of an unsaturated carboxylic acid is zinc, magnesium, calcium or aluminum.

11. A curable composition, according to any one of claims 1 through 10, wherein the unsaturated carboxylic acid is acrylic acid or methacrylic acid.

12. A curable composition, according to any one of claims 9 through 11, wherein in the case where glass is used as substrates, the maximum tensile strength is 80 N/cm² or more.

13. A curable composition, according to claim 12, wherein the maximum tensile strength holding rate after lapse of 3000 hours of accelerated artificial weathering is 70% or more.

14. A curable composition, according to any one of claims 9 through 13, wherein when aluminum is used as substrates, the maximum tensile strength is 80 N/cm² or more.

15. A sealing composition comprising the curable composition as set forth in any one of claims 1 through 14.

16. A sealing composition, according to claim 15, which is a sealing composition for double glazings.
